# FASCICULE DE BREVET EUROPEEN

(11) **EP 2 984 663 B1**
(45) Date de publication et mention de la délivrance du brevet: **10.05.2017**
(21) Numéro de dépôt: 14719047.4
(22) Date de dépôt: 27.03.2014
(51) Int. Cl.: H01F 29/04

(54) **TRANSFORMATEUR MUNI DE MOYENS D'AJUSTEMENT DU RAPPORT DE TRANSFORMATION EN CHARGE**
TRANSFORMATOR MIT VORRICHTUNG ZUR EINSTELLUNG DES INLOAD-TRANSFORMATIONSVERHÄLTNISSES
TRANSFORMER PROVIDED WITH MEANS FOR ADJUSTING THE IN-LOAD TRANSFORMATION RATIO

(30) Priorité: 08.04.2013 FR 1353112
(43) Date de publication de la demande: 17.02.2016
(73) Titulaire: Schneider Electric Industries SAS, 92500 Rueil-Malmaison (FR)
(72) Inventeur: HERRIOT, Yann, F-38050 Grenoble Cedex 09 (FR); JASKULA, Alain, F-38050 Grenoble Cedex 09 (FR); LAGACHE, Pierre, F-38050 Grenoble Cedex 09 (FR); SACOTTE, Michel, F-38050 Grenoble Cedex 09 (FR)
(74) Mandataire: Colette, Marie-Françoise
(86) Numéro de dépôt international: PCT/FR2014/050719
(87) Numéro de publication internationale: WO 2014/167205

(56) Documents cités:
- JP-A- S5 727 009
- JP-A- S56 146 209

## Description

### DOMAINE TECHNIQUE

L'invention concerne la distribution électrique et notamment les ajustements sur les rapports de transformation afin de maintenir dans des limites acceptables la tension circulant malgré les éventuelles fluctuations de charge.

En particulier, l'invention se rapporte à un appareil de transformation moyenne tension (MT) / basse tension (BT) dans lequel le transformateur principal est associé à un dispositif permettant la modification du rapport de transformation, sans nécessiter la mise hors charge du transformateur principal.

### ETAT DE LA TECHNIQUE

Les réseaux électriques sont généralement architecturés en plusieurs niveaux séparés par des postes de transformation : après un premier réseau de transport et de répartition très haute et haute tensions, un réseau de distribution moyenne tension HTA ou MT, usuellement entre 1 et 35 kV, et plus précisément 15 ou 20 kV en France, permet les transports à plus petite échelle, vers des clients de type industriels ou vers des réseaux basse tension BT (en particulier 0,4 kV en France) qui alimentent les clients de faible demande énergétique. Les transformateurs de distribution MT/BT sont ainsi conçus avec un ratio entre la tension d'entrée et de sortie, ou rapport de transformation, déterminé pour garantir un niveau de tension compatible avec les normes côté utilisateur.

L'évolution des charges, la structure physique du réseau, et notamment la longueur des câbles et l'impédance des éléments entre le transformateur et l'utilisateur, peuvent conduire à des fluctuations de tension qu'il est important de conserver aussi faibles que possible dans le réseau BT et chez les utilisateurs finaux. Au niveau des postes de transformation MT/BT sont ainsi placés des systèmes de régulation qui compensent les variations de tension causées par les changements dans le réseau en modifiant hors charge le rapport de transformation, comme par exemple décrit dans le document FR 2 787 248.

Cependant, l'insertion de moyens de production décentralisée, avec les panneaux photovoltaïques, fermes éoliennes et microcentrales, augmente considérablement les fluctuations paramétriques. De fait, une production locale, loin du transformateur source, peut contribuer à faire augmenter fortement la tension au voisinage de la production en raison de l'impédance de la ligne ; à l'inverse, en l'absence de production, l'impédance de la ligne crée un abaissement de la tension localement. Il importe alors d'augmenter, respectivement de diminuer, le rapport de transformation pour rester dans des limites préconisées. Il convient donc de munir les transformateurs de distribution MT/BT, classiquement à huile, de moyens de régulation dynamique du rapport de transformation, si possible en charge, c'est-à-dire sans devoir couper l'alimentation. Diverses solutions techniques ont été proposées pour ces « changeurs de prise en charge » ou OLTC (pour « *On Load Tap Changer* » selon la dénomination anglo-saxonne).

En particulier, la solution classique, mécanique, réalise le changement de rapport de transformation en modifiant le nombre de spires côté primaire (MT), grâce à la séparation de l'enroulement primaire en une partie principale et une partie adaptable. Cependant, un tel système mécanique de commutation est complexe et coûteux, à la fabrication comme à la maintenance : pour des impératifs d'isolement diélectrique, les commutateurs de la partie adaptable sont placés dans de l'huile qui est polluée lors des arcs électriques générés par le passage d'une prise à l'autre. Pour éliminer le problème d'arc électrique, il a été proposé d'utiliser des ampoules à vide (voir WO 2012/062408), qui cependant augmentent le coût et l'encombrement du transformateur initial.

Une autre option pour pallier les problèmes de commutation mécanique, présentée par exemple dans FR 2 873 489 ou WO 2010/072623, comprend l'utilisation de semi-conducteurs pour le passage d'une prise à l'autre. Ce type de composant ne pouvant être placé du côté de la moyenne tension sans difficultés et surcoût liés à la présence d'huile et aux contraintes d'isolation électrique, l'ajustement est alors réalisé du côté BT, ce qui diminue la précision de la régulation étant donné que la faible tension et l'importance du courant entraînent un nombre de spires d'ajustement de tension faible. Par ailleurs, la commande d'une telle solution est complexe et, au vu du courant circulant, ces composants semi-conducteurs ne peuvent être standards, avec en outre des pertes importantes : le coût de la solution est élevé.

Le document JP S57 27009 décrit un appareil électrique de transformation selon le préambule de la revendication 1.

### EXPOSE DE L'INVENTION

Parmi autres avantages, l'invention vise à pallier des inconvénients des dispositifs d'ajustement existants, et notamment à fournir un système fiable et peu coûteux de sélection de prises adapté pour les transformateurs MT/BT à huile.

Sous un de ses aspects, l'invention concerne ainsi un appareil de transformation de tension comprenant un premier transformateur principal, dont le rapport est déterminé par les tensions des circuits primaire MT et secondaire BT souhaitées. De préférence, il s'agit d'un transformateur à huile. De préférence, l'appareil est doté de moyens permettant de régler le rapport de transformation principal hors charge, préalablement au raccordement de l'appareil électrique au réseau et en fonction des caractéristiques dudit réseau. L'appareil comprend en outre un deuxième transformateur d'ajustement, de préférence également à huile et localisé dans la même cuve que le transformateur principal, dont l'enroulement secondaire est relié en série avec le circuit primaire du transformateur principal. L'enroulement primaire du transformateur d'ajustement comprend quant à lui au moins deux prises, en particulier aux extrémités, et de préférence trois. Le rapport de transformation du transformateur d'ajustement est avantageusement choisi pour correspondre à un pourcentage prédéterminé N, classiquement entre 0,5 % et 5 %, notamment 2,5 %, de celui du transformateur principal lorsqu'il est raccordé au transformateur principal par l'une des prises d'extrémité ; si une troisième prise centrale est prévue, il est souhaité qu'elle soit au centre de l'enroulement primaire, pour générer un rapport de transformation d'ajustement égal alors au double de la valeur de réglage convenue, notamment à 5 %, du rapport de transformation principal.

Deux prises au moins, de préférence les prises d'extrémité, du transformateur d'ajustement sont associées à trois lignes de connexion : une première ligne de connexion vers le circuit secondaire du transformateur principal munie de premiers moyens de commutation, une deuxième ligne de connexion vers une autre phase ou le neutre du circuit secondaire munie de deuxièmes moyens de commutation, et une troisième ligne de connexion, ou ligne de « bypass », vers le circuit secondaire du transformateur principal munie de troisièmes moyens de commutation et d'une impédance de charge. De préférence, les deux lignes de bypass mettent en commun leur impédance de charge. Les autres prises du transformateur d'ajustement peuvent ne comprendre qu'une seule ligne de connexion munie de moyens de commutation vers le circuit secondaire du transformateur principal.

Les moyens de commutation fonctionnent dans l'air, et sont de préférence regroupés sur une même platine accessible directement pour un opérateur.

L'appareil de transformation selon l'invention comprend également un système de commande des moyens de commutation des prises, qui peut être solidaire de l'appareil ou être déporté, et de préférence alimenté via le circuit secondaire du transformateur principal.

Afin d'éviter tout problème lors du changement de prise en charge, l'appareil selon l'invention est muni de moyens permettant de s'assurer que l'une au moins des lignes de connexion de deux prises différentes est fermée, de sorte que le primaire du transformateur d'ajustement ne soit pas en circuit ouvert. Avantageusement, un circuit de sécurité, notamment muni de commutateurs similaires aux moyens de commutation, est mis en place entre les premières et deuxièmes lignes de chaque prise ; alternativement, les moyens de commutation peuvent être choisis pour être à position bistable et/ou associés à des dispositifs de maintien en position.

Sous un autre aspect, l'invention est relative à une installation électrique triphasée correspondante. Notamment, une installation selon l'invention comprend trois appareils tels que précédemment définis, dont les transformateurs sont de préférence logés au sein de la même cuve à huile et dont les moyens de commutation sont également de préférence logés sur la même platine. Les trois appareils de l'installation électrique triphasée sont avantageusement de caractéristiques et paramètres identiques, et notamment les trois transformateurs, principaux et/ou d'ajustement, peuvent être eux-mêmes composés de blocs unitaires couvrant les trois phases. Le système de commande est apte à commander les moyens de commutation des différentes prises de façon simultanée, et de préférence, les moyens de commutation sont des contacteurs électromécaniques, fonctionnant dans l'air, qui peuvent être associés à des dispositifs de maintien en position.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1 montre une installation électrique triphasée selon un mode de réalisation préféré de l'invention.
La figure 2 représente le schéma électrique d'une installation selon l'invention.
Les figures 3A à 3F illustrent des étapes d'ajustement dans un appareil selon l'invention.

### DESCRIPTION DETAILLEE D'UN MODE DE REALISATION PREFERE

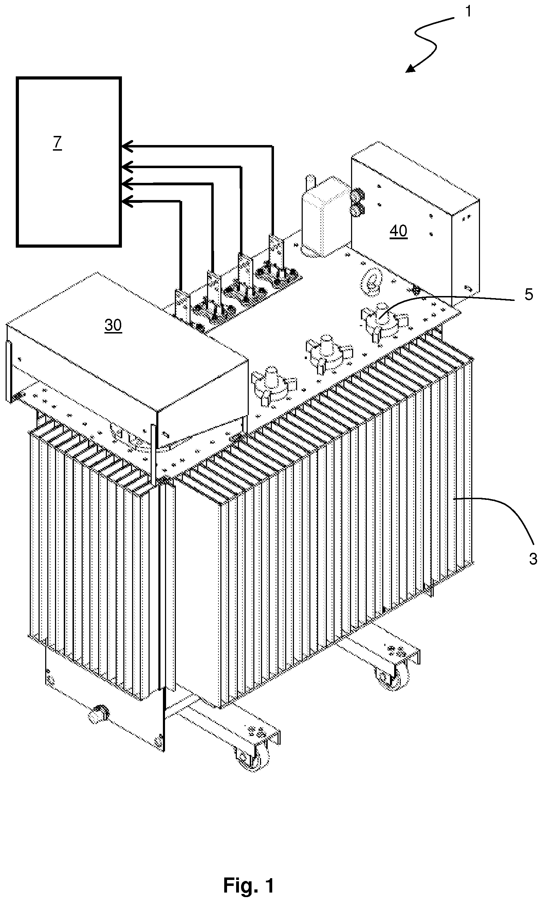

Une installation électrique triphasée 1 selon l'invention peut reprendre les éléments et caractéristiques classiques d'un ensemble transformateur triphasé commercialisé, tel qu'illustré en figure 1. En particulier, l'installation électrique 1 comprend avantageusement une cuve à ailettes 3 emplie d'huile ou autre fluide diélectrique dans laquelle sont logés les éléments de transformation proprement dits, et de laquelle émergent des traversées et autres dispositifs de raccordement 5 sur le réseau MT et vers l'armoire 7 et le réseau BT.

Comme élément de transformation principal, selon l'invention, il est possible d'utiliser un bloc transformateur principal logé dans la cuve 3, par exemple adapté pour 630 kVA, avec un circuit primaire à 20 kV - 18,2 A et un circuit secondaire à 410 V - 887 A, ou trois transformateurs 10 monophasés identiques, ou tout autre système. De préférence, des moyens sont prévus pour régler et ajuster sur site le(s) rapport(s) de transformation de l'élément de transformation principal, avant mise en fonction, en fonction des conditions locales MT/BT d'utilisation, de la localisation de l'installation 1..., par exemple un changeur de prise hors-tension classique.

Pour permettre l'ajustement de la tension tout en limitant les coûts, l'invention utilise un bloc transformateur d'ajustement, avec notamment un deuxième transformateur d'ajustement 20 associé à chaque transformateur principal 10. Le deuxième transformateur d'ajustement 20, de taille inférieure au transformateur principal 10 mais qui peut être de même nature, peut être mis en place dans la même cuve à huile 3. Le deuxième transformateur d'ajustement 20 est muni de prises qui permettent son association ou non avec le transformateur principal 10. Avantageusement, le transformateur d'ajustement 20 comprend trois prises 22, 24, 26 permettant une variation de tension de N % et de 2·N % (soit notamment, pour le cas présenté ci-dessus, avec N % = 2,5 %, des prises 500 V - 22,2 A et 1 kV - 43,3 A).

Cependant, l'invention n'utilise pas le principe du transformateur « *booster* » (selon la terminologie anglo-saxonne classique) en tant que transformateur de tension, mais en tant que transformateur de courant. De fait, l'ajout d'un transformateur booster simple tel que présenté dans CN 20158428 ne pallie pas le problème de complexité de mise en oeuvre si le changement de prise est réalisé dans l'huile par des dispositifs complexes ou via des semi-conducteurs.

L'invention repose quant à elle sur l'utilisation d'un système de commutation de prises éprouvé 30, avec commutation sur la basse tension de dispositifs eux-mêmes localisés dans l'air et non immergés dans la cuve 3 : ainsi, l'huile de la cuve 3 n'est pas polluée et les paramètres de réalisation sont aisés à mettre en oeuvre, étant donné qu'il s'agit de transformateurs immergés 10, 20 connus de très longue date. De plus, la maintenance est aisée, les éléments de commutation 30 pouvant être directement accessibles depuis l'extérieur.

Ainsi, selon l'invention, un deuxième transformateur 20 est associé au transformateur principal 10, ledit deuxième transformateur 20 prenant la tension du circuit secondaire, la traitant, et l'injectant en série sur la tension primaire pour l'ajuster. Cet ajustement de la tension primaire MT entraîne automatiquement une modification de la tension BT.

Les moyens de commutation 30 ne voient que le courant circulant dans le transformateur d'ajustement 20 et non dans le réseau complet. De préférence, les moyens de commutation 30 sont alors des contacteurs électromécaniques commercialisés et utilisés de façon commune par exemple pour la commande de moteurs, dont le coût est réduit et les performances prévisibles, qui en outre offrent l'avantage de regrouper dans un même dispositif les moyens de commutation des trois phases.

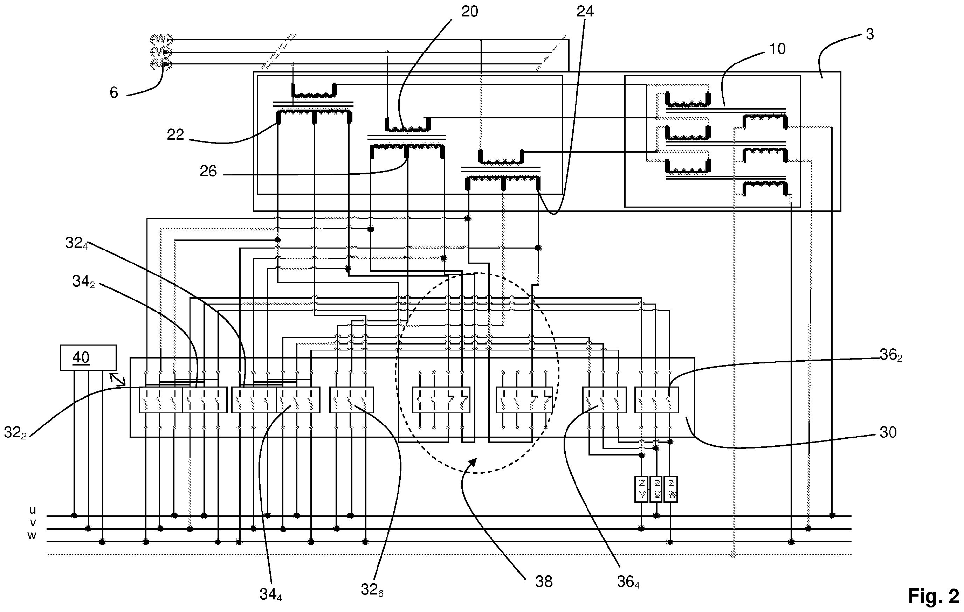

Dans le mode de réalisation illustré en figure 2, pour chaque phase U, V, W, les enroulements primaires du bloc transformateur principal et secondaires du bloc transformateur d'ajustement sont mis en série sur le réseau MT, l'enroulement secondaire de chaque transformateur principal 10 correspondant aux phases du réseau BT. Les enroulements primaires du bloc transformateur d'ajustement comprennent quant à eux plusieurs prises 22, 24, 26 qui peuvent, ou non, être raccordées à l'enroulement correspondant du bloc transformateur principal sur le réseau BT. Ainsi, selon la prise 22, 24, 26, le courant circule dans toute ou partie de l'enroulement primaire du transformateur d'ajustement 20, et le rapport de transformation de l'ensemble 10, 20 logé dans la cuve 3 est modifié, modifiant ainsi la tension du réseau secondaire BT (en partant de l'hypothèse que la tension MT est imposée par le générateur 6).

Pour connecter ou non une prise 22, 24, 26 d'un enroulement primaire d'un transformateur d'ajustement 20 au réseau BT, des lignes de connexion munies de moyens de commutation sont mises en oeuvre. En particulier, chaque prise 22, 24, 26 de chaque phase U, V, W est raccordée par une ligne munie d'un premier commutateur 32₂, 32₄, 32₆ sur la phase U, V, W correspondante du réseau BT. Il convient également de prévoir le retour de courant, et deux prises au moins 22, 24 sont raccordées par une ligne munie d'un deuxième commutateur 34, sur une autre phase V, U, W du réseau BT. Il est à noter qu'un raccordement sur le neutre pourrait également être prévu. Dans le mode de réalisation préféré illustré, seules les deux prises d'extrémité de l'enroulement 22, 24 sont raccordées à ladite deuxième ligne de connexion, ce qui s'avère de fait suffisant et diminue le nombre de contacteurs nécessaires.

L'ajustement du rapport de transformation étant, selon l'invention, réalisable en charge, des lignes additionnelles de connexion temporaire à une impédance de charge Z_{U}, Z_{V}, Z_{W} sont prévues. Selon l'invention, deux prises au moins 22, 24 sont raccordées à une troisième ligne munie d'un troisième commutateur 36₂, 36₄ et de l'impédance de charge Z_{U}, Z_{V}, Z_{W} sur la phase U, V, W correspondante du réseau BT. De fait, cette solution offre pour avantage de limiter le courant de magnétisation par rapport à un placement en série du centre de l'enroulement primaire et donc de diminuer les contraintes de magnétisation du transformateur d'ajustement 20 ; de plus, les contraintes de tension et de courant sont plus faibles au niveau des prises d'extrémité, de sorte que tant les impédances que les contacteurs associés sont protégés.

Par ailleurs, et tel qu'expliqué plus haut, le transformateur d'ajustement est utilisé en tant que transformateur de courant, alors que le changement de prise peut être réalisé en charge. Il convient donc de s'assurer que le passage du courant n'est jamais interrompu dans les transformateurs d'ajustement 20, sous peine de surtension dans leurs enroulements et casse d'éléments de l'installation 1. Des moyens pour s'assurer de la fermeture d'au moins un des contacteurs de deux prises différentes 22, 24 sont donc prévus, en l'occurrence, dans le mode de réalisation illustré, par la présence de contacteurs sur un circuit de sécurité 38 qui se ferme automatiquement en cas de défaut. Toute autre option est envisageable, par exemple l'utilisation de moyens de commutation autres que des contacteurs industriels conçus pour être normalement ouverts pour respecter les normes de sécurité des démarrages moteurs.

La platine 30 de contacteurs est associée à un système de commande 40 des moyens de commutation. De préférence, le système de commande est alimenté directement sur le réseau BT par l'intermédiaire de moyens adaptés. Le système de commande 40 peut être mis à demeure sur la cuve à huile 3, ou il peut être mis en place dans un coffret déporté, par exemple pour une commande hors site par l'intermédiaire de liaison filaire.

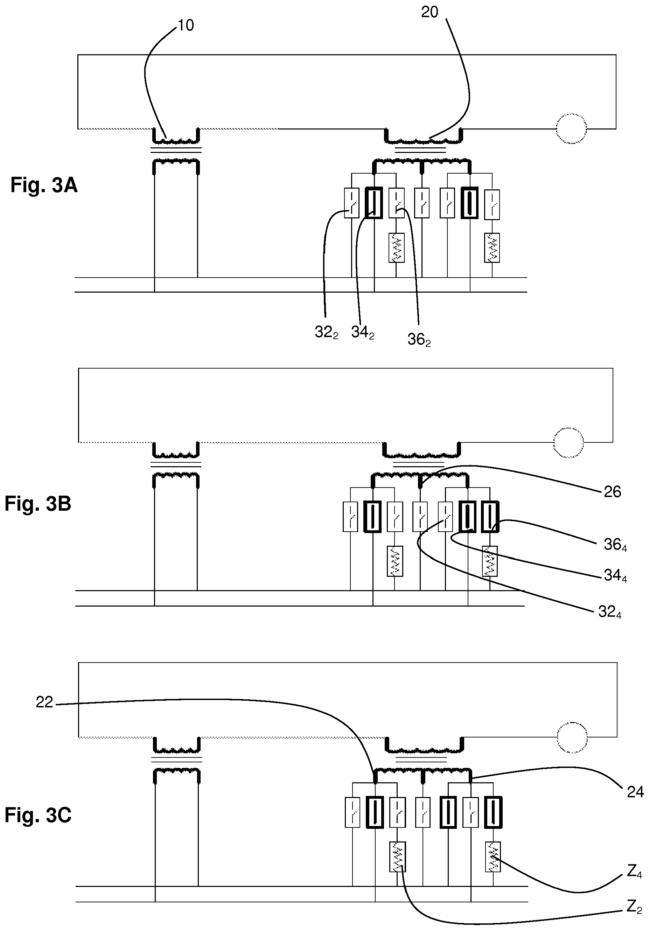

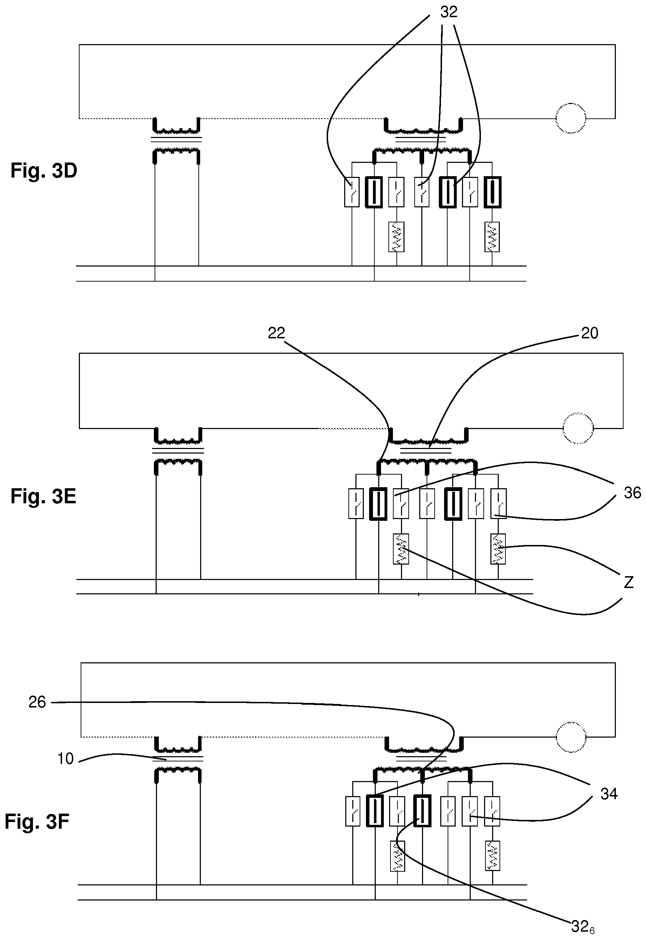

Le système de commande 40 est conçu pour permettre le basculement d'une prise à l'autre selon une séquence de fermeture/ouverture des contacteurs prédéfinie en fonction du degré d'ajustement du rapport de transformation requis. En particulier, le principe d'ajustement sera illustré en relation avec les figures 3 pour un appareil monophasé et le passage d'un ajustement nul, c'est-à-dire que seul le transformateur principal 10 est utilisé, à un ajustement de + N % et + 2·N %.

En position initiale (figure 3A), les trois prises 22, 24, 26 sont déconnectées de la phase du réseau BT, c'est-à-dire que les cinq contacteurs 32, 36 des premières et troisièmes lignes sont ouverts, et seuls les contacteurs 34 des deuxièmes lignes des prises d'extrémité 22, 24 sont fermés ; ces deux contacteurs 34₂, 34₄ sont maintenus mécaniquement fermés afin de garantir une sécurité lors d'une éventuelle perte de tension. Pour préparer le basculement de la prise d'extrémité droite 24 sur la phase de la basse tension, dans un premier temps illustré en figure 3B, il convient de passer par la fermeture via l'impédance de charge Z₄ en pilotant le contacteur 36₄ associé ; on passe donc par une étape intermédiaire dans laquelle deux contacteurs 34₄, 36₄ sont fermés pour la prise 24 concernée. Une fois cette fermeture de la troisième ligne acquise, il est possible d'ouvrir le deuxième contacteur 34₄ correspondant à la mise hors circuit de la prise, pour faire passer la tension uniquement par l'impédance Z₄. Le premier contacteur 32₄ est alors piloté pour être fermé, et une fois cette fermeture acquise (figure 3D), le contacteur de charge 36₄ est ouvert, et la position correspondant à un ajustement de + N % est obtenue (figure 3E). Ici encore, le premier contacteur 32₄ est maintenu dans cette position fermée par des moyens adaptés tant qu'un basculement n'est pas requis.

Une déconnexion de la prise 24 d'ajustement est réalisée en suivant les étapes en sens inverse, et notamment en passant par l'étape intermédiaire de fermeture du troisième contacteur 36 de l'impédance de charge Z lors de tout basculement entre premier et deuxième contacteurs 32, 34.

Pour un ajustement à 2·N % correspondant à la connexion de la prise centrale 26, un processus similaire est mis en oeuvre à partir de la position correspondant à la figure 3C dans laquelle les deuxième et troisième contacteurs 34₄, 36₄ de la prise d'extrémité sont fermés : le contacteur 32₆ associé à la prise centrale 26 est fermé (figure 3F), puis le contacteur de charge 36₄ est ouvert (non illustré).

Pour des ajustements négatifs, de la même façon, on connecte la prise gauche 22 selon une séquence définie impliquant les contacteurs 32₂, 34₂, 36₂ (et 32₆) ; il est de fait avantageux de procéder à la commutation via l'impédance de charge Z₂ correspondant à la prise 22.

Il serait possible d'ajouter d'autres prises sur le même enroulement du transformateur d'ajustement 20 pour augmenter le nombre de modifications du rapport de transformation de l'installation 1. Alternativement, afin de faciliter les raccordements électriques et éviter des interactions néfastes, pour un ajustement à cinq prises (et donc neuf valeurs d'ajustement), il est préféré de mettre en oeuvre en série deux transformateurs d'ajustement 20 similaires à celui présenté en relation avec les figures 2 et 3. De fait, dans la majorité des cas et prescriptions, cinq prises sont amplement suffisantes, et l'utilisation de deux transformateurs d'ajustement similaires permet en outre de limiter les coûts de stockage et maintenance.

La solution selon l'invention, tout en utilisant des composants additionnels dont le coût et l'encombrement sont minimes au vu des contraintes sur les transformateurs liées à la puissance de l'installation 1, permet donc un réglage de la puissance nominale avec des degrés de variation qu'il est possible d'ajuster de façon précise sur site, avant mise en service, en fonction de la localisation du transformateur et de la nature du réseau local.

Les variations du rapport de transformation de l'installation 1 sont ensuite réalisées en charge, en toute sécurité notamment dans le cas d'utilisation de contacteurs bistables, sans nécessiter ni ampoule à vide, ni électronique de puissance, ni même une mesure de tension ou de courant. Bien que réalisé du côté BT, l'ajustement du rapport de transformation est précis, avec une plage qui peut être fine, notamment de 2,5 et 5 %. Le pilotage des variations de transformation peut être réalisé à distance, ou directement sur site, par l'intermédiaire d'un automate standard prévu pour fonctionner dans un environnement industriel contraignant, et notamment sans mesure de tension et/ou courant. En outre, la maintenance est équivalente à celle des transformateurs existants, les contacteurs étant eux-mêmes des solutions éprouvées, fiables et facilement accessibles.

Bien que l'invention ait été décrite en référence à un ensemble transformateur de distribution triphasée à huile MT/BT de 630 kVA piloté par des contacteurs de type industriel, elle ne s'y limite pas : d'autres dispositifs de transformation et d'autres moyens de commutation peuvent être concernés par l'invention. En particulier, le circuit primaire du bloc d'ajustement 20 peut être relié en série avec les enroulements primaires du bloc transformateur 10, le secondaire du bloc d'ajustement 20 étant piloté avec une phase et le neutre. Outre les contacteurs électromécaniques, il est possible d'utiliser des moyens de commutation de type semi-conducteurs, ou autres. Et bien entendu, toute la gamme de transformateurs MT/BT peut être concernée par l'ajustement selon l'invention, en particulier de 100 à 2500 kVA, pour un réseau MT de 5 à 36 kV et un réseau BT de 220 à 440 V.

## Revendications

1. Appareil électrique de transformation comprenant :
- un transformateur principal (10) avec un circuit primaire moyenne tension et un circuit secondaire basse tension ;
- un transformateur d'ajustement (20) du transformateur principal (10) **caractérisé en ce que** le transformateur d'ajustement (20) comprend un enroulement secondaire relié au circuit primaire moyenne tension et un enroulement primaire comprenant au moins deux prises (22, 24), chaque prise étant associée à
∘ une première ligne munie de premiers moyens de commutation (32) reliée au circuit secondaire basse tension,
∘ une deuxième ligne munie de deuxièmes moyens de commutation (34) reliée à une autre phase ou au neutre du circuit secondaire basse tension,
∘ une troisième ligne munie de troisièmes moyens de commutation (36) et d'une impédance de charge (Z) reliée au circuit secondaire basse tension ;
- un système de commande (40) des premiers, deuxièmes et troisièmes moyens de commutation (32, 34, 36) de chacune des deux prises (22, 24).

2. Appareil électrique de transformation selon la revendication 1 dans lequel l'impédance de charge (Z₂, Z₄) est commune pour les troisièmes lignes des deux prises (22, 24).

3. Appareil électrique de transformation selon l'une des revendications 1 ou 2 dans lequel l'enroulement primaire du transformateur d'ajustement (20) comprend une troisième prise (26) reliée via des moyens de commutation (32₆) au circuit secondaire basse tension, le système de commande (40) étant adapté pour commander en outre les moyens de commutation (32₆) de la troisième prise (24).

4. Appareil électrique de transformation selon la revendication 3 dans lequel la troisième prise (26) est située entre la première et la deuxième prise (22, 26) sur l'enroulement primaire du transformateur d'ajustement (20), notamment au centre des deux prises (22, 24).

5. Appareil électrique de transformation selon l'une des revendications 1 à 4 comprenant des moyens pour s'assurer qu'un au moins des moyens de commutation d'au moins deux prises différentes est fermé.

6. Appareil électrique de transformation selon l'une des revendications 1 à 5 comprenant des moyens pour régler le rapport de transformation du transformateur principal (10).

7. Appareil électrique de transformation selon l'une des revendications 1 à 6 dans lequel les transformateurs principal et d'ajustement (10, 20) sont localisés dans une cuve à huile (3).

8. Appareil électrique de transformation selon la revendication 7 comprenant une platine (30) logeant les moyens de commutation (32, 34, 36) des prises (22, 24, 26) de l'enroulement primaire du transformateur d'ajustement (20), ladite platine (30) étant accessible directement hors de la cuve à huile (3).

9. Appareil électrique de transformation selon l'une des revendications 7 ou 8 dans lequel le système de commande (40) est déporté de la cuve à huile (3).

10. Appareil électrique de transformation selon l'une des revendications 1 à 9 dans lequel le système de commande (40) est alimenté directement depuis l'enroulement secondaire du transformateur (10).

11. Installation électrique triphasée comprenant un appareil selon l'une des revendications 1 à 11 pour chaque phase, et dans laquelle le système de commande (40) est adapté pour commander de façon simultanée les moyens de commutation (32, 34, 36) respectifs de chaque appareil.

12. Installation électrique triphasée selon la revendication 12 dans laquelle les impédances de charge (Z) et le rapport de transformation de chaque transformateur (10, 20) sont identiques pour les trois appareils.

13. Installation électrique triphasée selon l'une des revendications 11 ou 12 dans laquelle les deux transformateurs (10, 20) des trois appareils sont logés dans une même cuve à huile (3), les moyens de commutation des trois appareils sont logés dans une même platine (30) hors de la cuve à huile (3).

14. Installation électrique triphasée selon l'une des revendications 11 à 13 dans laquelle, pour chaque phase, les moyens de commutation de chaque ligne de chaque prise sont regroupés et formés par un contacteur électromécanique.

## Patentansprüche

1. Elektrisches Umwandlungsgerät, das Folgendes umfasst:
- einen Hauptwandler (10) mit einem Mittelspannungs-Primärschaltkreis und einem Niederspannungs-Sekundärschaltkreis,
- einen Einstellwandler (20) des Hauptwandlers (10), **dadurch gekennzeichnet, dass** der Einstellwandler (20) eine Sekundärwicklung umfasst, die mit dem Mittelspannungs-Primärschaltkreis verbunden ist, und eine Primärwicklung, die mindestens zwei Stecker (22, 24) umfasst, wobei jeder Stecker verbunden ist mit
∘ einer ersten Leitung, die mit ersten Umschaltmitteln (32) versehen ist, die mit dem Niederspannungs-Sekundärschaltkreis verbunden ist,
∘ einer zweiten Leitung, die mit zweiten Umschaltmitteln (34) versehen ist, die mit einer anderen Phase oder mit dem Nullleiter des Niederspannungs-Sekundärschaltkreises verbunden ist,
∘ einer dritten Leitung, die mit dritten Umschaltmitteln (36) und einer Lastimpedanz (Z) versehen ist, die mit dem Niederspannungs-Sekundärschaltkreis verbunden ist,
- ein Steuersystem (40) der ersten, zweiten und dritten Umschaltmittel (32, 34, 36) jedes der zwei Stecker (22, 24).

2. Elektrisches Umwandlungsgerät nach Anspruch 1, wobei die Lastimpedanz (Z₂, Z₄) für die dritten Leitungen der zwei Stecker (22, 24) gemeinsam ist.

3. Elektrisches Umwandlungsgerät nach Anspruch 1 oder 2, wobei die Primärwicklung des Einstellwandlers (20) einen dritten Stecker (26) umfasst, der über Umschaltmittel (32₆) mit dem Niederspannungs-Sekundärschaltkreis verbunden ist, wobei das Steuersystem (40) angepasst ist, um außerdem die Umschaltmittel (32₆) des dritten Steckers (26) zu steuern.

4. Elektrisches Umwandlungsgerät nach Anspruch 3, wobei der dritte Stecker (26) zwischen dem ersten und dem zweiten Stecker (22, 24) auf der Primärwicklung des Einstellwandlers (20), insbesondere in der Mitte der zwei Stecker (22, 24) liegt.

5. Elektrisches Umwandlungsgerät nach einem der Ansprüche 1 bis 4, das Mittel umfasst, um sicherzustellen, dass mindestens eines der Umschaltmittel von mindestens zwei unterschiedlichen Steckern geschlossen ist.

6. Elektrisches Umwandlungsgerät nach einem der Ansprüche 1 bis 5, das Mittel zum Einstellen des Umwandlungsverhältnisses des Hauptwandlers (10) umfasst.

7. Elektrisches Umwandlungsgerät nach einem der Ansprüche 1 bis 6, wobei der Hauptwandler und der Einstellwandler (10, 20) in einer Ölwanne (3) liegen.

8. Elektrisches Umwandlungsgerät nach Anspruch 7, das eine Platte (30) umfasst, die die Umschaltmittel (32, 34, 36) der Stecker (22, 24, 26) der Primärwicklung des Einstellwandlers (20) aufnimmt, wobei die Platte (30) direkt außerhalb der Ölwanne (3) zugänglich ist.

9. Elektrisches Umwandlungsgerät nach einem der Ansprüche 7 oder 8, wobei das Steuersystem (40) von der Ölwanne (3) verlagert ist.

10. Elektrisches Umwandlungsgerät nach einem der Ansprüche 1 bis 9, wobei das Steuersystem (40) direkt von der Sekundärwicklung des Wandlers (10) gespeist ist.

11. Drehstrom-Elektroanlage, die ein Gerät nach einem der Ansprüche 1 bis 10 für jede Phase umfasst, und wobei das Steuersystem (40) angepasst ist, um die jeweiligen Umschaltmittel (32, 34, 36) jedes Geräts gleichzeitig zu steuern.

12. Drehstrom-Elektroanlage nach Anspruch 11, wobei die Lastimpedanzen (Z) und das Umwandlungsverhältnis jedes Wandlers (10, 20) für die drei Geräte identisch sind.

13. Drehstrom-Elektroanlage nach einem der Ansprüche 11 oder 12, wobei die zwei Wandleren (10, 20) der drei Geräte in ein und derselben Ölwanne (3) untergebracht sind, wobei die Umschaltmittel der drei Geräte in ein und derselben Platte (30) außerhalb der Ölwanne (3) untergebracht sind.

14. Drehstrom-Elektroanlage nach einem der Ansprüche 11 bis 13, wobei die Umschaltmittel jeder Leitung jedes Steckers für jede Phase gruppiert sind und aus einem elektromechanischen Schalter bestehen.

## Claims

1. Electrical transformation device comprising:
- a main transformer (10) with a medium-voltage primary circuit and a low-voltage secondary circuit;
- an adjustment transformer (20) for the main transformer (10) **characterized in that** the adjustment transformer (20) comprises a secondary winding connected to the medium-voltage primary circuit and a primary winding comprising at least two taps (22, 24), each tap being associated with
∘ a first line equipped with first switching means (32) connected to the low-voltage secondary circuit,
∘ a second line equipped with second switching means (34) connected to another phase or to the neutral of the low-voltage secondary circuit,
∘ a third line equipped with third switching means (36) and with a load impedance (Z) connected to the low-voltage secondary circuit;
- a control system (40) for controlling the first, second and third switching means (32, 34, 36) of each of the two taps (22, 24).

2. Electrical transformation device according to Claim 1, in which the load impedance (Z₂, Z₄) is common for the third lines of the two taps (22, 24).

3. Electrical transformation device according to either Claim 1 or Claim 2, in which the primary winding of the adjustment transformer (20) comprises a third tap (26) connected via switching means (32₆) to the low-voltage secondary circuit, the control system (40) being suitable for additionally controlling the switching means (32₆) of the third tap (26).

4. Electrical transformation device according to Claim 3, in which the third tap (26) is located between the first and the second tap (22, 24) on the primary winding of the adjustment transformer (20), notably at the center of the two taps (22, 24).

5. Electrical transformation device according to one of Claims 1 to 4, comprising means for ensuring that at least one of the switching means of at least two different taps is closed.

6. Electrical transformation device according to one of Claims 1 to 5, comprising means for regulating the transformation ratio of the main transformer (10).

7. Electrical transformation device according to one of Claims 1 to 6, in which the main and adjustment transformers (10, 20) are located in an oil tank (3).

8. Electrical transformation device according to Claim 7, comprising a plate (30) housing the switching means (32, 34, 36) of the taps (22, 24, 26) of the primary winding of the adjustment transformer (20), said plate (30) being directly accessible outside the oil tank (3).

9. Electrical transformation device according to either Claim 7 or Claim 8, in which the control system (40) is positioned away from the oil tank (3).

10. Electrical transformation device according to one of Claims 1 to 9, in which the control system (40) is supplied directly from the secondary winding of the transformer (10).

11. Three-phase electrical installation comprising a device according to one of Claims 1 to 10 for each phase, and in which the control system (40) is suitable for simultaneously controlling the respective switching means (32, 34, 36) of each device.

12. Three-phase electrical installation according to Claim 11, in which the load impedances (Z) and the transformation ratio of each transformer (10, 20) are identical for the three devices.

13. Three-phase electrical installation according to either Claim 11 or Claim 12, in which the two transformers (10, 20) of the three devices are housed in the same oil tank (3), and the switching means of the three devices are housed in the same plate (30) outside the oil tank (3).

14. Three-phase electrical installation according to one of Claims 11 to 13, in which, for each phase, the switching means of each line of each tap are grouped together and formed by an electromechanical contactor.
